# EUROPEAN PATENT SPECIFICATION

(11) **EP 1 473 132 B1**
(45) Date of publication and mention of the grant of the patent: **18.08.2010**
(21) Application number: 04010275.8
(22) Date of filing: 30.04.2004
(51) Int. Cl.: B29B 11/16, B29L 9/00, B29L 31/30, B29K 101/10, B29K 301/12, B29K 307/04

(54) **Method for manufacturing a multiaxial fabric**
Verfahren um ein mehrachsengewebe zu produzieren
Méthode de fabrication d'un tissu multiaxial

(30) Priority: 02.05.2003 US 428500
(43) Date of publication of application: 03.11.2004
(73) Proprietor: The Boeing Company, Chicago, IL 60606-1596 (US)
(72) Inventor: Tsotsis, Thomas K., Dr., Orange CA 92866 (US)
(74) Representative: Steil, Christian

(56) References cited:
- EP-A- 1 101 855
- EP-A1- 1 125 728
- EP-A1- 1 175 998
- WO-A1-99/44810
- FR-A1- 2 761 380
- US-A- 5 085 928

## Description

The present invention relates to a method for manufacturing a reinforced composite material using a multiaxial fabric.

### FIELD OF THE INVENTION

The present invention relates, generally, to cured composites built from layers of unidirectional fibers. In particular, the invention utilizes highly porous lightweight materials in conjunction with multilayer preforms to obtain cured articles with improved toughness.

### BACKGROUND OF THE INVENTION

High-performance composite materials built of alternating layers of unidirectional reinforcing fibers have an advantageous combination of high strength and light weight. As such they find use in aerospace and other industries where such properties are critical. Generally, the composite materials are prepared by laying up a number of alternating layers wherein adjacent layers have unidirectional fibers running at different angles. The net effect of buildup of several layers of such unidirectional fabrics is to provide a composite material having exceptional strength, either quasi-isotropically, or in one or more particular directions.

Such composite materials may be produced as prepregs or as preforms. In prepregs, layers of unidirectional fabrics immersed or impregnated with a resin are laid-up into the shape of the part to be produced from the composite material. Thereafter, the laid-up part is heated to cure the resin and provide the finished composite part. In the preform approach, layers of unidirectional reinforcing fibers or woven, braided, or warp-knit fabric are laid up similarly to the way they are laid-up in prepregs. However, in the preform method, the layers are laid-up dry. Thereafter, the laid-up material is infused with resin in a liquid-molding process, and the molded part is heated to cure the resin as in the prepregs.

The alternating layers, or lamina, of reinforcing fibers provide the composite articles made from the prepreg or preform process with a great deal of strength, especially in directions that align with specific fiber directions.
Accordingly, very strong lightweight parts may be produced, for example, as wings and fuselages of aircraft. Although the alternating lamina of reinforcing fibers provide strength, toughness or impact resistance is determined mainly by the properties of the cured resin. Impact-resistant or toughened resins are preferred because they are resistant to damage from impact. This is important, for example, in the case of airplane wings made from such composite materials. Any failure from foreign-object impact during flight would be catastrophic for the airplane to which the wing is attached. Also, any damage resulting from ground-maintenance impact (e.g. from tool drop, forklifts or other vehicles) would require replacement of the entire piece, because such composite materials are built up as a single piece. Furthermore, because impact damage in composite materials is generally not visible to the naked eye, it is important for such primary load-bearing structures to be able to carry their full design load after impact and prior to detection using non-destructive techniques.

In prepregs, the resin, typically an epoxy-based formulation, may be toughened by adding particles of a thermoplastic material to the conventional resin. These thermoplastic particles may either be soluble in the matrix resin and dissolve in the epoxy resin or may be insoluble and placed, during the prepregging operation (see, for example, US 5,028,478) on the surface of each layer. Upon cure, the thermoplastic resin in the cured epoxy matrix serves to limit crack propagation through the part. Preform materials may be stitched before resin infusion and cure to provide toughness and crack resistance. One drawback to stitching is the reduction of in-plane mechanical properties, particularly as the stitch density increases. The prepreg approach of applying particles of thermoplastic material to the resin before cure is not directly transferable to the liquid molding processes used to prepare preform articles, In the resin infusion of the liquid molding process, soluble thermoplastics tend to increase the melt-flow viscosity of the matrix resin unacceptably, while insoluble thermoplastic toughening particles tend to be filtered by the preform and thus will not be located uniformly between the plies in the preform.

In the European Patent EP 1 175 998 to Mitsubishi, laminated products formed of reinforcing fibers are provided in which thermoplastic resin layers are provided between layers of the reinforcement fiber. The thermoplastic resin layer is described in the form ofa porous film, fiber, network structure, knitted loop, and the like. The laminated product uses a thermoplastic layer of sufficient permeability between the layers of reinforcing fibers so as not to inhibit liquid resin flow during a liquid molding process. One drawback inherent in processes such as those described in EP 1 175 998 is that the performs made of alternating layers of reinforcing fibers and thermoplastic resin layers are less than perfectly stable during resin infusion. As a result, the reinforcing fibers and the thermoplastic resin layer tend to move or shift during the liquid molding process. Such moving or shifting can be mitigated by stitching together the layers before infusion with the resin. Another drawback to the processes described in EP 1 175 998 is that they are primarily effective for hand lay-up operations and not for automated lay-up operations that would be more relevant in the fabrication of large aircraft parts or in the continuous production of broad goods.

Further, document EP 1 125 728 A1 discloses a method for manufacturing a reinforced composite preform using a multiaxial fabric comprising reinforcing layers of unidirectional fiber and non-woven interlayers disposed between the reinforcing layers, wherein the short fibers constituting the non-woven fabric pass through the fiber reinforcing material to integrate the fiber reinforcing material with the non-woven fabric. As an alternative, this document discloses to manufacture the preform such that the fiber reinforcing material is integrated with the non-woven fabric by heat bonding, wherein the fibers constituting the non-woven fabric contain 5 to 50 % by weight of low-melting-point fibers.

Document WO 99/44810 discloses a method to manufacture a multiaxial preform made of unidirectional fiber layers and flat hotmelt adhesive mats.

It is therefore the object of the invention to provide an improved method for manufacturing a fiber reinforced composite material.

Particularly, it would be desirable to provide a molded article made by a preform process in which the reinforcing fibers are held tightly in relative orientation to one another. It would further be desirable to provide a process for making such a preform article in widths and lengths feasible for producing large-scale parts, such as airplane wings, from them.

The above object is achieved by the manufacturing method of claim 1.

In one embodiment, the invention provides a multiaxial preform made up of reinforcing layers of unidirectional fibers. Non-woven interlayers made of spunbonded, spunlaced, or mesh fabric of thermoplastic fibers are disposed between and melt-bonded or stitched to the reinforcing layers. The multiaxial preform is used in a liquid-molding process by which resin is infused into the preform, followed by heating to gel and set the resin. The interlayers are permeable to permit the flow of resin during the liquid molding operation. In a preferred embodiment, the interlayer material is melt-bonded to at least one of the unidirectional layers, preferably on both sides. The layers are further held together with knit threads. The melt-bonded interlayers hold the unidirectional fibers in place during the resin infusion and subsequent curing of the resin to produce a fiber reinforced composite material. In a preferred embodiment, the unidirectional fibers are made of carbon fibers. The material making up the interlayers is chosen for compatibility with the resin upon curing. In one embodiment, the resin is an epoxy resin and the interlayer fibers are made of a polyamide.

In another embodiment, the invention provides a method for manufacturing a multiaxial fabric made of reinforcing layers of unidirectional fiber, with non-woven interlayers disposed between the reinforcing layers. The method includes the step of melt-bonding an interlayer material made of thermoplastic fibers to one or both sides of a unidirectional dry fabric to produce a dry unidirectional tape. Thereafter, a preform may be built up from the unidirectional tape by laying down the tape with at least one other layer or lamina of unidirectional fibers at angles between -90 and +90° from the warp direction of the multiaxial fabric.

In a preferred embodiment, alternating unidirectional fibers is accomplished by building up the preform from a plurality of dry unidirectional tapes. The layers of the preform are preferably stitched together. Fabric-reinforced composite materials may be prepared by molding such a preform and infusing the preform in the mold with a thermosetting resin in a liquid-molding process.

The lamina of unidirectional fibers in the multiaxial fabric may be laid-down in quasi-isotropic or orthotropic patterns. The pattern may be repeated as needed to achieve a desired thickness of the finished part. The repeated pattern may be constant, or may be varied across the preform. Where the repeated pattern is varied across the preform, the locally different thicknesses may be mechanically held in place, such as by stitching, tufting, or heating to melt-bond the multilayers together. Alternatively, a localized "tackifier", such as are known in the trade, may be used for holding preform pieces in place mechanically.

Conventional methods for manufacturing large-scale preform materials may be modified to produce multiaxial fabrics containing reinforcing layers of unidirectional fibers with non-woven interlayers disposed between the reinforcing layers and melt-bonded to at least one of them. In one method, a plurality of tows is first pulled across a set of pins to create reinforcing layers of unidirectional fibers. An interlayer material is introduced to reside between the reinforcing layers, and the layers of unidirectional fibers are knitted together to form a multilayer stack. The interlayer material may be attached to individual reinforcing layers via heating without causing all layers to be melt-bonded to each other.

Fiber-reinforced composite materials may be made by molding a preform and infusing the preform with a thermosetting resin in a number of liquid-molding processes. Liquid-molding processes that may be used in the invention include, without limitation, vacuum-assisted resin transfer molding (VARTM), in which resin is infused into the preform using a vacuum-generated pressure differential. Another method is resin transfer molding (RTM), wherein resin is infused under pressure into the preform in a closed mold. A third method is resin film infusion (RFI), wherein a semi-solid resin is placed underneath or on top of the preform, appropriate tooling is located on the part, the part is bagged and then placed in an autoclave to melt and infuse the resin into the preform. The RFI method is described in US patent 4,311,661.

### BRIEF DESCRIPTION OF THE DRAWINGS

The present invention will become more fully understood from the detailed description and the accompanying drawings, wherein:

Figure 1 is a schematic side view of the thermoplastic fibers, that are preferably used for making a non-woven interlayer;

Figure 2 illustrates a stitched preform;

Figure 3 illustrates a process for preparing a unidirectional dry tape; and

Figure 4 illustrates a process for producing a preform.

### DETAILED DESCRIPTION OF THE PREFERRED EMBODIMENTS

The following description of the preferred embodiment(s) is merely exemplary in nature and is in no way intended to limit the invention, its application, or uses.

A multiaxial fabric is prepared that is made of alternating layers of reinforcing unidirectional fibers and non-woven interlayers. The non-woven interlayers comprise a spunbonded, spunlaced, or mesh fabric of thermoplastic fibers. The interlayers are disposed between and knit-stitched to the reinforcing layers. In a preferred embodiment, the thermoplastic interlayers are melt-bonded to at least one of reinforcing unidirectional fabric layers. Such multiaxial fabrics may be manufacture by a number of processes to produce preforms that are 304,8mm - 7620mm [12-300"] wide.

Fiber reinforced composite materials are made by molding a multiaxial preform such as described above, and infusing the preform with a thermosetting resin in a liquid-molding process. After infusion of the preform, the component is heated in the mold to gel and set the resin.

Layers of unidirectional fibers for use in the multiaxial preforms and fiber reinforced composite materials of the invention are well known in the art. In a preferred embodiment, the unidirectional fibers are made of carbon fibers, Other examples of unidirectional fibers include, without limitation, glass fibers and mineral fibers. Such layers of unidirectional fibers are usually prepared by a laminating process in which unidirectional carbon fibers are taken from a creel containing multiple spools of fiber that are spread to the desired width and the melt-bonded to a thermoplastic interlayer, as described above, under heat and pressure.

The interlayer is made of a spunbonded, spunlaced, or mesh fabric of thermoplastic fibers. The thermoplastic fibers may be selected from among any type of fiber that is compatible with the thermosetting resin used to form the fiber reinforced composite material. For example, the thermoplastic fibers of the interlayer may be selected from the group consisting of polyamide, polyimide, polyamide-imide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate.

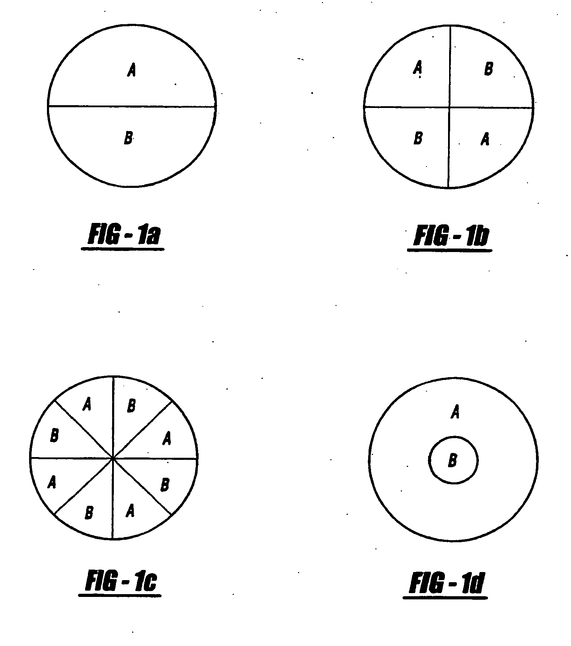

In a preferred embodiment, the thermoplastic fibers are made from two or more materials. For example, the two or more materials may be prepared by mechanically mixing different fibers, which are used to create the spunbonded, spunlaced, or mesh fabric. In a preferred embodiment, the two or more materials may be used to form a bi-component fiber, tri-component fiber or higher component fiber to create the interlayer fabric. Non-limiting examples of bi-component fibers are illustrated schematically in Figure 1. Figure 1(a) shows in cross-section a fiber made for example by coextrusion of a fiber material A and a fiber material B. Such a fiber may be produced by a spinneret with two outlets. Figure 1(b) shows a bi-component fiber made from materials A and B such as would be produced by extrusion through four spinnerets. Similarly, Figure 1(c) shows a bi-component fiber spun from eight spinnerets. In a preferred embodiment, the bi-component fiber is used in the form of a core sheath fiber such as illustrated in Figure 1(d). In a core sheath fiber, a fiber material of one type, illustrated as B in Figure 1(d) is extruded as the core, while a fiber material of another type, illustrated as A in Figure 1(d) is extruded as the sheath.

Bi-component fibers such as illustrated in Figure 1, and other fibers containing more than two components are well known in the art and can be made by a number of conventional procedures. Additionally, although the fibers in Figure 1 are illustrated schematically with circular cross-sections, it is to be appreciated that other cross-sections may be used.

In a preferred embodiment, the interlayer material is made of bi-component fibers containing a sheath of one material and a core of another. In a particularly preferred embodiment, the sheath is made of a polyurethane and the core is made of a polyamide.

In a preferred embodiment, the fibers making up the interlayer have diameters from 1 to 100 microns, preferably from 10 to 75 microns and more preferably from 10 to 30 microns. In another embodiment, the thermoplastic fibers have diameters from 1 to 15 microns.

The interlayer material may have a wide range of areal densities. The areal density may be chosen according to the amount required to impart the desired impact resistance, as verified for example by compression-after-impact testing according to Boeing test method BSS 7260. The desired impact-resistance level is determined on a part-by-part basis assuming specific impact-energy levels. In one embodiment, the interlayer material has a areal density of 1-50 grams/square meter. In another embodiment, the areal density of the interlayer is about 2-15 grams/square meter.

The interlayer material may be a spunbonded fabric. Spunbonded fabrics are produced from continuous fibers that are continuously spun and bonded thermally. These fabrics are commercially available from a wide variety of sources, primarily for the clothing industry. Preferred fabrics have areal weights that are generally lower than those of fabrics used in clothing.

In another embodiment, the interlayer is a spunlaced fabric. Spunlaced fabrics are prepared from continuous fibers that are continuously spun and bonded mechanically. These fabrics are commercially available from a wide variety of sources, primarily for the clothing industry. As for the spunbonded fabrics, preferred spunlaced fabrics have areal weights that are generally lower than those commonly used in the clothing industry.

In another embodiment, the interlayer comprises a mesh fabric. In a preferred embodiment, the mesh construction contains between 0.5 and 15 threads per 25,4mm [inch] in the warp and weft directions.

The multiaxial preform comprises a plurality of reinforcing layers with interlayers disposed between the reinforcing layers and melt-bonded to at least one of the reinforcing layers. It is preferred to use multiaxial preforms having 4 or more reinforcing layers of unidirectional fabrics. In another embodiment, the preform has from 2-16 layer of unidirectional fabrics.

The lamina may be laid-down in a quasi-isotropic pattern. A quasi-isotropic pattern is one that approximates an isotropic material in the plane of the fibers. This is also known as transverse isotropy. For example it is possible to lay-down lamina in a quasi-isotropic 0/+45/90/-45 pattern. To illustrate, other quasi-isotropic patterns include +45/0/-45/-90 and -4510/+45/90. Another quasi-isotropic pattern is 0/+60/-60.

In another embodiment, the lamina may be laid-down in an orthotropic pattern. Orthotropic means having fibers or units such that the net result is not quasi-isotropic in plane like the quasi-isotropic patterns just described. An example of an orthotropic pattern is one with 44% 0°, 22% +45°, 22% -45° and 12% 90° fibers. In this example, greater longitudinal strength (along the 0°-direction) and lower shear strength (±45°-direction) and transverse strength (90°-direction) than a quasi-isotropic (25/50/25) lay-up are achieved. The resulting built-up lamina provide higher strength and thickness in the 0° direction as compared to a quasi-isotropic laminate, but provide lower shear strength and thickness (provided by the ±45° layers). Correspondingly, in the example, the 90° strength is lower than a quasi-tropic laminate. The term orthotropic is well understood in the field. For example a 0° fabric is orthotropic, as well as any other pattern that does not result in balanced average in plane (*i.e.* quasi-isotropic) properties.

As noted above, it is common to prepare the laminae in sets of four. Where desired, the pattern of four laminae may be repeated to achieve a desired thickness. In a preferred embodiment, when it is desired to build-up a desired thickness, mirror-image lamina stacks are used to prevent post-cure bending and twisting due to thermal stresses created after curing the resin at elevated temperature. In such a case, the total lay-up would be made up of groups of balanced laminae, or laid-up alternately to balance the laminate. This practice is common in the field and is done to ensure the fabrication of flat parts and to avoid the problem of parts with unknown and/or temperature-sensitive configurations.

In one embodiment, the interlayers made of thermoplastic fibers are melt-bonded to the unidirectional fiber layers between which they are disposed. Such melt-bonding acts to maintain the orientation of the unidirectional fibers in place during resin infusion into the mold during a (subsequent) liquid-molding process. In addition, the multiaxial preform may be knitted or sewed together with thread to hold the fabric layers together during resin infusion and cure. In an alternative embodiment, a warp-knit, multiaxial fabric may be assembled by knit-stitching the reinforcing layers together with thermoplastic interlayers between the reinforcing layers. The knit thread or sewing thread may be selected from a variety of materials, including without limitation, polyester-polyarylate (*e.g.* Vectran®), polyaramid (*e.g.* Kevlar®)), polybenzoxazole (*e.g.* Zylon®)), viscose (*e.g.* Rayon®)), acrylic, polyamide, carbon, and fiberglass). Where desired, the knitting or sewing step is carried out after the initial lay-up of the multiaxial preform. The same kinds of threads may be used to hold locally different thicknesses mechanically in place by stitching and by tufting, as discussed above.

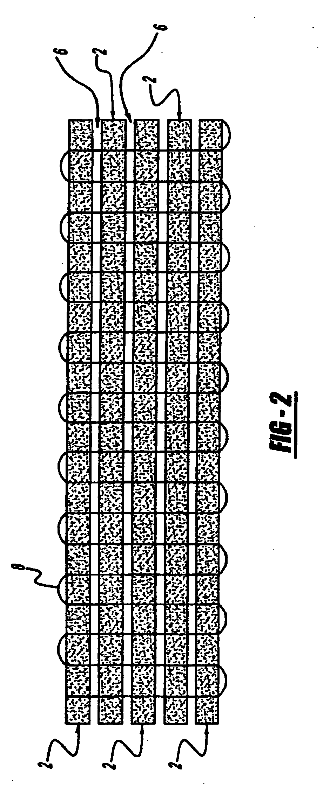

Figure 2 shows a multiaxial preform for a composite material for use in a liquid-molding process of the invention. In Figure 2, interlayers 6 made of thermoplastic fibers are disposed between reinforcing fabric layers 2 of unidirectional fabrics. In a preferred embodiment, at least some of the interlayers are melt-bonded to an adjacent reinforcing fabric layer. A sewing thread 8 may be used to hold the preform layers together.

In another embodiment, the invention provides a multiaxial warp knit fabric where the thermoplastic interlayer is melt-bonded only to the 0-degree layers with the non-0-degree layers and other interlayers attached to the 0-degree layer using a knit thread. In a preferred embodiment, only the 0-degree layer is melt-bonded. To illustrate, an example lay-up is thermoplastic (TP) interlayer not melt-bonded/+45° fibers/TP interlayer melt-bonded to top of 0° layer/0° fibers/TP interlayer melt-bonded to bottom of 0° layer/-45° fibers/TP interlayer not melt-bonded/90° fibers with the whole assembly knitted together.

The 0-degree layer is generally used as the primary load carrying direction. By stabilizing the 0-degree layer in the preferred embodiment by melt-bonding a thermoplastic interlayer, the strength of the resulting molded part is increased without having to melt-bond the other directions. Although in this embodiment the other directions are not necessarily strengthened as much as the 0-degree layer, the other layers will generally contribute to greater impact resistance of the molded part due to the presence of non-bonded interlayer material.

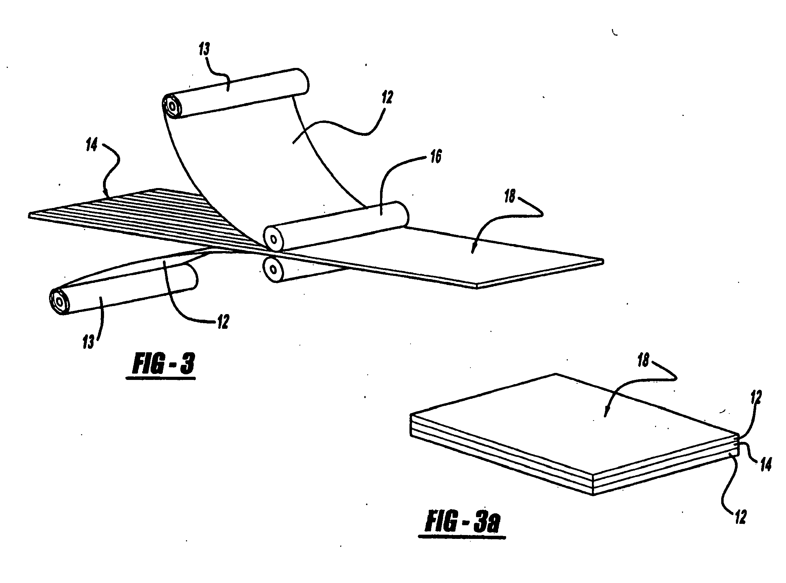

In one embodiment, an interlayer material may be melt-bonded to one or both sides of a unidirectional dry fabric to produce a dry unidirectional tape. Figure 3 illustrates such a process. A veil 12 made of the interlayer material is fed from rollers 13 and laminated to a unidirectional dry fabric 14. The veil 12 is melt bonded to the fabric 14, for example by passing between heated rollers 16, to produce a fabric 18 having a veil material melt bonded to the unidirectional fibers. The fabric 18 may be provided in the form of a dry unidirectional tape. Figure 3a shows a detail of the construction of a fabric 18 with interlayer material 12 melt bonded to both sides of the unidirectional dry fabric 14. In an alternative embodiment, the veil material 12 may be melt-bonded to only one side of the unidirectional fibers 14. However, it is preferred to melt-bond the interlayer material on both sides of the unidirectional dry fabric to produce a tape with easier handleability.

The dry unidirectional tape 18 may be used to assemble a multiaxial preform in a continuous process, such as disclosed in EP0972102/WO9844183 by Hexcel, the disclosure of which is hereby incorporated by reference. In a process described in the Hexcel patent, unidirectional dry tapes are introduced along a moving bed to produce a multiaxial lay-up. The Hexcel patent describes a method wherein several unidirectional webs are stacked in different directions and mutually linked. At least one of the unidirectional webs is provided with cohesion for manipulation before being stacked with the other web. In the Hexcel patent, cohesion is provided for example by physical entanglement, chemical adhesives, or by providing the web with stitch filaments that may be melted with heat to provide cohesion between the fibers of the unidirectional webs.

Unidirectional webs with good cohesion for manipulation before being stacked are provided. The cohesion is provided by a spunlaced, spunbonded or mesh fabric melt-bonded to a layer of unidirectional fibers. Dry unidirectional tapes may be prepared by the process illustrated in Figure 3.

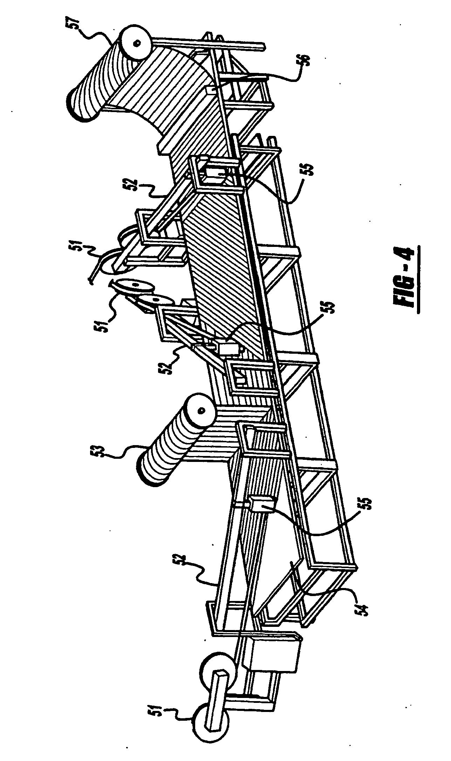

A process for making the preform of the invention is schematically illustrated in Figure 4. In the method of Figure 4, unidirectional tapes are provided on unidirectional tape rolls, 51 and on longitudinal roll 53. Longitudinal roll 53 may holed a plurality of rolls of unidirectional fabric to achieve a desired width. Tape rolls 51 are associated with lay-up devices 52 and tape delivery heads 55 that lay down four plies of fabric on a moving conveyor 54. The lay-up devices are disposed at a plurality of angles relative to the warp direction, corresponding to the desired pattern of buildup of the four-layer preform material. After all four layers are laid down, the fabric passes through a knitting unit 56 and is taken up on take-up spool 57.

Alternatively, a device such as described in Hagel, US 5,241,842 or Wunner, et al., US 6,276,174 may be used to prepare multiaxial preforms by providing tows of unidirectional carbon fibers. One or a plurality of tows is pulled across pins to create reinforcing layers of unidirectional fibers. In this embodiment, a means is provided for introducing the interlayer material between the layers of unidirectional carbon fibers. Because the interlayer material is non-directional, it need not be introduced at an angle in the way that the unidirectional carbon fibers are.

The multiaxial preforms of the invention may be made into cured fiber-reinforced composite materials by a variety of liquid-molding processes. In one, vacuum-assisted resin transfer molding, a resin is introduced to a mold containing the multiaxial preform under vacuum. The resin infuses the preform and saturates the interlayers between the layers of unidirectional fibers. The interlayers are made of a material that is permeable to permit the flow of resin during the liquid-molding operation. Furthermore, the melt-bonded interlayers hold the unidirectional fibers in place during the resin infusion.

In another method, resin transfer molding, resin is infused under pressure into a closed mold. These and other liquid-molding processes may be used to prepare the cured fiber-reinforced composite material of the invention.

Following infusion of the resin in the mold in a process such as those described above, the mold is heated to cure the resin to produce the finished part. During heating, the resin reacts with itself to form crosslinks in the matrix of the composite material. After an initial period of heating, the resin gels. At gel, the resin no longer flows, but rather behaves as a solid. In a preferred embodiment, it is important to gel the resin at a temperature below the melting point of the thermoplastic fibers of the interlayer in order to prevent their melting and flowing into the reinforcement fiber bundles. After gel, the temperature or cure may be ramped up to a final temperature to complete the cure. The final cure temperature depends on the nature and properties of the thermosetting resin chosen. For the case of aerospace-grade epoxy resins, it is conventional to ramp the temperature after gel up to a temperature range of 162,7°C [325] to 190,5°C [375°F] and hold at this temperature for 1 to 6 hours to complete the cure.

### Examples

The results shown below are for compression-after-impact (CAI) panels made and tested according to BMS 8-276 (a Boeing material specification for a toughened prepreg system used for commercial aircraft) using BSS 7260 Type II, Class 1 impact with an impact energy of 3,11 kg m [270 in-lb].

Test panels were prepared as follows. The panel lay-up was (+45/0/- 45/90)_{3S} using unidirectional fabric from Anchor Reinforcements (Huntington Beach, CA) to which spunbonded fabric had been melt-bonded. A control used only a thermoplastic weft fiber to hold the fabric together. The three spunbonded fabrics were supplied by Spunfab (Cuyahoga Falls, OH) in areal weights of 4,24·10⁻³ Kg/m², 8,48·10⁻³ kg/m², and 1,27·10⁻² kg/m² [0.125, 0.250, and 0.375 oz/yd²]. The three materials used were PE2900, a polyester; VI6010, a ternary polymer blend; and PA1008, a polyamide.

A dry, uni-directional tape 330,2mm [13-inches] in width was prepared by melt-bonding the respective spun bonded fabrics onto a tape containing 190 g/m² of T700 carbon fibers (Toray, Tokyo, Japan). The uni-directional tape was cut in the same manner as prepreg and laid-up according to BMS 8-276 as described above. The laid-up fabric was VARTM processed using an epoxy resin, TV-15, from Applied Poleramic, Inc. (Benicia, CA). After infusion and cure, the resulting panels were machined into 101,6 mm x 152,4 mm [4" x 6"] impact test specimens according to BSS7260. Impact was performed using a 7,94 mm [0.3125"] spherical steel tup. Four panels for each construction were tested.

After impact, all specimens were ultrasonically C-scanned. In these figures, a through-transmission amplitude plot and the bottom row shows a time-of-flight response was prepared. Impact damage areas were calculated directly from the center "hole" shown in the amplitude plots using the built-in software tool on the C-scan apparatus. These results are shown in Table 1.

Compression-after-impact strength results are shown in Table 2 and panel thicknesses and per-ply thicknesses are shown in Table 3. Tables 1 and 2 show significant decreases in impact damage area for the PA 1008 and VI6010 interlayer materials as well as significant increases in compression-after-impact strength for these same materials, respectively. Table 3 shows that the interlayer-toughening concept meets the current commercial Boeing specification (BMS 8-276) for per-ply thickness.

**Table 1. Average Impact Damage Area for Three Panels vs. Control.**

| **Examples** | **Spunbonded Fabric** | **Impact Damage Area (in²)** | | | | **Percent Change in Impact Area** | | |
|---|---|---|---|---|---|---|---|---|
| | | **Interlayer Areal Weight** | | | | **Interlayer Areal Weight** | | |
| | | none | 0.125 | 0.250 | 0.375 | 0.125 | 0.250 | 0.375 |
| | | | oz/yd² | oz/yd² | oz/yd² | oz/yd² | oz/yd² | oz/yd² |
| **Comparative** | Control | 7.134 | | | | N/A | N/A | N/A |
| 1 | PE2900 | | 8.258 | 8.632 | 10.037 | 15.8 | 21.0 | 40.7 |
| 2 | V16010 | | 4.529 | 3.936 | 2.093 | -36.5 | -44.8 | -70.,7 |
| 3 | PA1008 | | 1.489 | 1.160 | 0.619 | -79.1 | -83.7 | -91.3 |

**Table 2. Average Compression-After-Impact Strength for Three Panels vs. Control.**

| **Examples** | **CAI Strength (ksi)** | | | | **Percent Change CAI Strength** | | |
|---|---|---|---|---|---|---|---|
| | **Interlayer Areal Weight** | | | | **Interlayer Areal Weight** | | |
| | none | 0.125 | 0.250 | 0.375 | 0.125 | 0.250 | 0.375 |
| | | oz/yd² | oz/yd² | oz/yd² | oz/yd² | oz/yd² | oz/yd² |
| **Comparative** | 19.3 | | | | | | |
| 1 | | 17.2 | 15.6 | 13.8 | -10.9 | -19.2 | -28.6 |
| 2 | | 20.5 | 24.3 | 29.4 | 6.1 | 26.2 | 52.6 |
| 3 | | 30.6 | 27.8 | 39.6 | 58.6 | 44.4 | 105.3 |

**Table 3. Average Cured-Panel Thicknesses.**

| **Examples** | **Average Panel Thickness (in)** | | | | **Average Per-Ply Thickness (mil)*** | | | |
|---|---|---|---|---|---|---|---|---|
| | | | | | **Interlayer Areal Weight** | | | |
| | none | 0.125 oz/yd² | 0.250 oz/yd² | 0.375 oz/yd² | none | 0.125 oz/yd² | 0.250 oz/yd² | 0.375 oz/yd² |
| **Comparative** | 0.170 | | | | 7.08 | | | |
| 1 | | 0.175 | 0.185 | 0.186 | | 7.29 | 7.71 | 7.75 |
| 2 | | 0.173 | 0.182 | 0.180 | | 7.21 | 7.58 | 7.50 |
| 3 | | 0.177 | 0.189 | 0.187 | | 7.38 | 7.88 | 7.79 |

| | | | | | | | | |
|---|---|---|---|---|---|---|---|---|
| *calculated from average thickness/24 plies | | | | | | | | |

The description of the invention is merely exemplary in nature and, thus, variations that do not depart from the gist of the invention are intended to be within the scope of the invention. The scope of the invention, is defined in the appended claims.

## Claims

1. A method for manufacturing a fiber reinforced composite material using a multiaxial fabric comprising reinforcing layers (14) of unidirectional fiber with non-woven interlayers (12) disposed between the reinforcing layers (14), wherein the non-woven interlayers (12) comprise a spunbonded, spunlaced, or mesh fabric of thermoplastic fibers disposed between the reinforcing layers (2; 14), and wherein the interlayers (12) are permeable to permit the flow of resin during a liquid molding operation,
the method comprising:
melt-bonding an interlayer material (12) comprising thermoplastic fibers to one or both sides of a unidirectional dry fabric (14) to produce a dry unidirectional tape (18);
building up a preform from the unidirectional tape by laying down at least four lamina of unidirectional tape (18) at angles between -90 and +90° from the warp direction of the multiaxial fabric;
infusing the preform with a thermosetting resin in a liquid molding process; and
heating the preform to gel and finally cure the resin, wherein the resin is gelled at a temperature below the melting point of the fibers in the interlayers (12) in order to prevent their melting and flowing into the unidirectional fibers of the reinforcing layers (14).

2. The method of claim 1, wherein the tape lamina are stitched together with a knit thread (8) before the infusion step.

3. The method of claim 1, wherein the lamina (18) are laid-down in a 0/-45/+45/90 pattern.

4. The method of claim 1, wherein the thermoplastic fibers are selected from the group consisting of polyamide, polyimide, polyamide-imide, polyester, polybutadiene, polyurethane, polypropylene, polyetherimide, polysulfone, polyethersulfone, polyphenylsulfone, polyphenylene sulfide, polyetherketone, polyethertherketone, polyarylamide, polyketone, polyphthalamide, polyphenylenether, polybutylene terephthalate and polyethylene terephthalate, wherein the fibers comprise preferably at least two different materials.

5. The method of claim 4, wherein the thermoplastic fibers comprise a bi-component fiber, and wherein the bi-component fiber comprises a sheath of one material and a core of another, and wherein, preferably, the sheath comprises polyurethane and the core comprises polyamide.

6. The method of any of claims 1 - 5, wherein the interlayer material (6; 12) has an areal density of 1-50 grams/square meter, preferably 2-15 grams/square meter.

7. The method of any of claims 1 - 6, wherein the interlayers (6; 12) comprises a mesh fabric, wherein the mesh construction contains between 0.5 and 15 threads per 25,4 mm [inch] in the warp and weft directions.

8. The method of any of claims 1 - 7, wherein the preform is 304,8 mm - 7620 mm [12 - 300 inches] wide, preferably 609,6 mm - 2540 mm [24 - 100 inches] wide, and most preferred about 1270 mm [50 inches] wide.

## Patentansprüche

1. Verfahren zum Herstellen eines faserverstärkten Kompositmaterials unter Verwendung eines multiaxialen Gewebes, das verstärkende Schichten (14) aus unidirektionalen Fasern aufweist, wobei nicht gewebte Zwischenschichten (12) zwischen den verstärkenden Schichten (14) angeordnet sind, wobei die nicht gewebten Zwischenschichten (12) ein spungebondetes, spungelacetes oder vernetztes Gewebe aus thermoplastischen Fasern aufweisen, die zwischen den verstärkenden Schichten (2; 14) angeordnet sind, und wobei die Zwischenschichten (12) permeabel sind, um während eines Nasspressvorganges den Durchfluss von Kunstharz zu gestatten,
wobei das Verfahren aufweist:
Schmelzverbinden eines Zwischenschichtmaterials (12), das thermoplastische Fasern aufweist, mit einer oder beiden Seiten eines unidirektionalen trockenen Gewebes (14), um ein trockenes unidirektionales Band (18) herzustellen;
Aufbauen einer Vorform aus dem unidirektionalen Band, indem wenigstens vier Laminierungsschichten aus unidirektionalem Band (18) unter Winkeln zwischen -90 und +90° gegenüber der Kettrichtung des multiaxialen Gewebes abgelegt werden;
Einspritzen eines thermisch aushärtenden Kunstharzes in die Vorform während eines Nasspressverfahrens; und
Erwärmen der Vorform, um das Kunstharz zu verfestigen und letztlich auszuhärten, wobei das Kunstharz bei einer Temperatur unterhalb des Schmelzpunktes der Fasern in den Zwischenschichten (12) fest wird, um zu verhindern, dass die Fasern schmelzen und in die unidirektionalen Fasern der verstärkenden Schichten (14) fließen.

2. Verfahren nach Anspruch 1, wobei die Bandlaminierungsschichten mit einem Verknüpfungsfaden (8) zusammengestickt werden, und zwar vor dem Infusionsschritt.

3. Verfahren nach Anspruch 1, wobei die Laminierungsschichten (18) in einem 0/-45/+45/90-Muster abgelegt werden.

4. Verfahren nach Anspruch 1, wobei die thermoplastischen Fasern ausgewählt sind aus der Gruppe, die aus Polyamid, Polyimid, Polyamid-Imid, Polyester, Polybutadien, Polyurethan, Polypropylen, Polyetherimid, Polysulfon, Polyethersulfon, Polyphenylsulfon, Polyphenylensulfid, Polyetherketon, Polyethertherketon, Polyarylamid, Polyketon, Polyphthalamid, Polyphenylenether, Polybutylenterephthalat und Polyethylenterephthalat besteht, wobei die Fasern vorzugsweise wenigstens zwei unterschiedliche Materialien aufweisen.

5. Verfahren nach Anspruch 4, wobei die thermoplastischen Fasern eine Bi-Komponentenfaser aufweisen und wobei die Bi-Komponentenfaser eine Hülle aus einem Material und einen Kern aus einem anderen Material aufweist, und wobei vorzugsweise die Hülle Polyurethan und der Kern Polyamid aufweist.

6. Verfahren nach einem der Ansprüche 1 - 5, wobei das Zwischenschichtmaterial (6; 12) eine Flächendichte von 1 - 50 Gramm/Quadratmeter, vorzugsweise 2 - 15 Gramm/Quadratmeter aufweist.

7. Verfahren nach einem der Ansprüche 1 - 6, wobei die Zwischenschichten (6; 12) ein Netzgewebe aufweisen, wobei die Netzkonstruktion zwischen 0,5 und 15 Fäden pro 25,4 mm [Zoll] in der Kett- und in der Schussrichtung aufweist.

8. Verfahren nach einem der Ansprüche 1 - 7, wobei die Vorform 304,8 mm - 7620 mm [12 - 300 Zoll] breit ist, vorzugsweise 609,6 mm - 2540 mm [24 - 100 Zoll] breit ist, und am bevorzugtesten etwa 1270 mm [50 Zoll] breit ist.

## Revendications

1. Procédé de fabrication d'un matériau composite renforcé de fibre utilisant un tissu multiaxial comprenant des couches de renforcement (14) de fibre unidirectionnelle avec des couches intermédiaires non tissées (12) disposées entre les couches de renforcement (14), dans lequel les couches intermédiaires non tissées (12) comprennent un tissu filé-lié, filé-lacé, ou maillé de fibres thermoplastiques disposé entre les couches de renforcement (2 ; 14), et dans lequel les couches intermédiaires (12) sont perméables pour permettre l'écoulement de résine au cours d'une opération de moulage liquide,
le procédé comprenant les étapes consistant à :
thermolier un matériau de couche intermédiaire (12) comprenant des fibres thermoplastiques à un ou aux deux côtés d'un tissu sec unidirectionnel (14) pour produire une bande unidirectionnelle sèche (18) ;
constituer une préforme à partir de la bande unidirectionnelle en déposant au moins quatre strates de bande unidirectionnelle (18) à des angles entre -90 et +90° à partir du sens de chaîne du tissu multiaxial ;
infuser la préforme avec une résine thermodurcissable dans un procédé de moulage liquide ; et
chauffer la préforme pour gélifier et enfin traiter thermiquement la résine, dans lequel la résine est gélifiée à une température inférieure au point de fusion des fibres dans les couches intermédiaires (12) afin d'empêcher leur fusion et écoulement dans les fibres unidirectionnelles des couches de renforcement (14).

2. Procédé selon la revendication 1, dans lequel les strates de bande sont cousues ensemble avec un fil de tricot (8) avant l'étape d'infusion.

3. Procédé selon la revendication 1, dans lequel les strates (18) sont déposées dans une armure 0/-45/+45/90.

4. Procédé selon la revendication 1, dans lequel les fibres thermoplastiques sont sélectionnées parmi le groupe constitué de polyamide, de polyimide, de polyamide-imide, de polyester, de polybutadiène, de polyuréthane, de polypropylène, de polyétherimide, de polysulfone, de polyéthersulfone, de polyphénylsulfone, de sulfure de polyphénylène, de polyéthercétone, de polyétheréthercétone, de polyarylamide, de polycétone, de polyphthalamide, d'éther de polyphénylène, de téréphtalate de polybutylène et de téréphtalate de polyéthylène, dans lequel les fibres comprennent de préférence au moins deux matériaux différents.

5. Procédé selon la revendication 4, dans lequel les fibres thermoplastiques comprennent une fibre à deux composants, et dans lequel la fibre à deux composants comprend une gaine d'un matériau et une âme d'un autre matériau, et dans lequel, de préférence, la gaine comprend du polyuréthane et l'âme comprend du polyamide.

6. Procédé selon une quelconque des revendications 1 à 5, dans lequel le matériau de couche intermédiaire (6 ; 12) possède une densité surfacique de 1 à 50 grammes/mètre carré, de préférence 2 à 15 grammes/mètre carré.

7. Procédé selon une quelconque des revendications 1 à 6, dans lequel les couches intermédiaires (6 ; 12) comprennent un tissu maillé, dans lequel la construction de maille contient entre 0,5 et 15 fils par 25,4 mm [pouces] dans les sens de chaîne et de trame.

8. Procédé selon une quelconque des revendications 1 à 7, dans lequel la préforme mesure 304,8 mm à 7620 mm [12 à 300 pouces] de large, de préférence 609,6 mm à 2540 mm [24 à 100 pouces] de large, et idéalement environ 1270 mm [50 pouces] de large.
